(19) Europäisches Patentamt
European Patent Office
Office européen des brevets

(11) **EP 3 332 464 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(21) Anmeldenummer: **16738182.1**

(22) Anmeldetag: **13.07.2016**

(51) Int Cl.:
**H02G 5/00** (2006.01)    **H02B 1/20** (2006.01)

(86) Internationale Anmeldenummer:
**PCT/EP2016/066579**

(87) Internationale Veröffentlichungsnummer:
**WO 2017/025265 (16.02.2017 Gazette 2017/07)**

(54) **VORRICHTUNG ZUR HERSTELLUNG EINER MEHRPHASIGEN ELEKTRISCHEN VERBINDUNG SOWIE EINE ANORDNUNG MIT ENTSPRECHENDEN VORRICHTUNGEN**

DEVICE FOR PRODUCING A MULTI-PHASE ELECTRIC CONNECTION AND AN ARRANGEMENT HAVING CORRESPONDING DEVICES

DISPOSITIF D'ÉTABLISSEMENT D'UNE CONNEXION ÉLECTRIQUE POLYPHASÉE ET ENSEMBLE COMPORTANT DES DISPOSITIFS CORRESPONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2015 DE 102015113123**

(43) Veröffentlichungstag der Anmeldung:
**13.06.2018 Patentblatt 2018/24**

(73) Patentinhaber: **SMA Solar Technology AG 34266 Niestetal (DE)**

(72) Erfinder:
- **FALK, Andreas 34131 Kassel (DE)**
- **UMLAUF, Sebastian 34117 Kassel (DE)**

(56) Entgegenhaltungen:
**DE-U1- 29 703 525    US-A- 3 325 588**

EP 3 332 464 B1

**Beschreibung**

Die Erfindung betrifft eine Vorrichtung zur Herstellung einer mehrphasigen elektrischen Verbindung umfassend mindestens ein Verbindungselement pro Phase sowie eine Anordnung mit entsprechenden Vorrichtungen.

In elektrischen Anlagen, wie sie beispielsweise Brennstoffzellenanwendungen, Elektro- und Hybridfahrzeuge oder auch Photovoltaikkraftwerke umfassen, ist es in der Regel notwendig, zwischen verschiedenen Komponenten dieser Anlagen elektrische Leistung zu übertragen. Hierzu finden elektrische Verbindungselemente Verwendung. Bei der Auswahl geeigneter Verbindungselemente spielen verschiedene Anforderungen eine Rolle. So müssen neben der zu übertragenden elektrischen Leistung z.B. auch mechanische Anforderungen und gegebenenfalls elektrodynamische Effekte mit berücksichtigt werden.

Um große Leistungen zu übertragen, finden verbreitet massive Stromschienen z.B. aus Kupfer oder Aluminium Verwendung. So ist es üblich, Stromschienen z.B. auch zur Anbindung eines mehrphasigen, häufig dreiphasig ausgeführten Wechselspannungsausgangs eines Wechselrichters, an andere elektrische Komponenten einer elektrischen Anlage einzusetzen.

Eine verbreitete Anforderung an solche elektrische Verbindungselemente ist, dass sie in der Lage sein sollen, Ungenauigkeiten bei der relativen Positionierung der zu verbindenden Komponenten zueinander auszugleichen, also einen sog. Toleranzausgleich zu ermöglichen. Das ist mit den oben erwähnten massiven Stromschienen nicht bzw. nur in sehr eingeschränktem Maße möglich. Aus diesem Grund werden bevorzugt mechanisch flexible Verbindungselemente eingesetzt, die z.B. aus Aluminium- oder Kupfergeflechten bestehen können (vgl. z.B. DE29703525U1). Hierbei handelt es sich häufig um Sonderanfertigungen, die entsprechend höhere Kosten verursachen können als sie sich beim Einsatz handelsüblicher Materialien ergeben würden.

Bei allen oben genannten Verbindungselementen können physikalische Effekte wie der sog. Skin- und der Proximity-Effekt dazu führen, dass bei deren Einsatz in Wechselstromsystemen die Stromdichte innerhalb der Verbindungselemente im Gegensatz zu Gleichstromsystemen nicht homogen ist. Ist beispielsweise bei einem massiven zylindrischen Leiter der Leiterdurchmesser wesentlich größer als die aus dem Skin-Effekt resultierende sog. Eindringtiefe, trägt abhängig von der Frequenz unter Umständen nur eine Schicht der Dicke der Eindringtiefe unterhalb der Oberfläche des Leiters den gesamten Strom. Bei der Verwendung mehrere Leiter führt der Proximity-Effekt in Folge von Wirbelströmen bedingt durch die durch veränderliche Magnetfelder in benachbarten Leitern induzierten Spannungen zu einem weiteren Verdrängungseffekt. Bei parallel angeordneten Leitern, die durch einen gleichsinnigen Strom durchflossen sind, bewirkt die Überlagerung der beiden Effekte, dass der Stromfluss auf eine noch kleinere Querschnittsfläche des Leiters begrenzt ist. Entsprechend hoch ist der resultierende Wechselstromwiderstand im Vergleich zum Gleichstromwiderstand. Eine Darstellung dieser Effekte sowie ihrer Auswirkungen auf den Wechselstromwiderstand von Energiekabeln findet sich beispielsweise in R. Suchantke, H. Just, "Numerische Untersuchung des Wechselstromwiderstandes von Energiekabeln", TU Berlin, Fachgebiet Theoretische Elektrotechnik, PROJEKT ELEKTROMAGNETISCHE SIMULATION: WECHSELSTROMWIDERSTAND ENERGIEKABEL, 13. MÄRZ 2014.

Diese Verdrängungseffekte führen damit aufgrund der sich ergebenden Widerstände zu Verlusten und damit auch zu lokalen thermischen Belastungen innerhalb der Verbindungselemente. Dabei hängt die Größenordnung der Belastung u.a. von der Frequenz der Ströme, die durch die Verbindungselemente fließen und von geometrischen Faktoren, wie etwa dem Durchmesser oder dem Abstand der Verbindungselemente voneinander ab.

Im Jahresbericht 2011 des Instituts für Elektrische Energieversorgung und Hochspannungstechnik der Technischen Universität Dresden ist ein Artikel von *R. Adam mit dem Titel" Untersuchungen zur Stromverdrängung in Sammelschienensystemen von Niederspannungs-Schalfgerätekombinationen (NS-SK)"* enthalten. Dort finden sich Ergebnisse einer numerischen Simulation zur Stromdichteverteilung in parallel zueinander angeordneten Stromschienen eines dreiphasigen Systems unter Berücksichtigung von Skin- und Proximity-Effekten. Sie zeigen die nicht homogene Stromverteilung innerhalb eines Aufbaus mit sechs Stromschienen, die von einem dreiphasigen Strom durchströmt werden. Zu erkennen ist hier u.a. eine erhöhte Stromdichte im Randbereich sich gegenüberliegender Stromschienen unterschiedlicher Phase.

In der US3178668A wird unter anderem auf die Möglichkeiten der Reduzierung der Impedanz in mehrphasigen Energieübertragungssystemen durch eine enge räumliche Anordnung von Stromschienen einzelner Phasen hingewiesen.

In der US20100051342A1 wird die Anordnung von magnetischen Abschirmungen zwischen Stromschienen vorgeschlagen, um Proximity-Effekte bedingt durch den durch die parallel angeordneten Stromschienen fließenden Strom zu vermindern.

Im Stand der Technik finden sich verschiedene Ansätze durch einen geschickten inneren Aufbau von Leitern bzw. Verbindungselementen den Einfluss der oben geschilderten Verdrängungseffekte zu verringern oder den Materialbedarf dieser Elemente z.B. durch die Verwendung von Hohlleitern zu verringern (vgl. z.B. DE10 2012107751A1).

So werden in einigen Anwendungen sog. Milliken-Leiter eingesetzt. Sie sind aus verseilten, elektrisch isolierten Segmenten aufgebaut, die ihrerseits aus verseilten Einzeldrähten bestehen. Hierdurch soll erreicht werden, dass durch jeden Einzeldraht Strom gleicher Stärke fließt und sich so die durch die Stromflüsse in den einzelnen Einzeldrähten induzierten Spannungen gegenseitig kompensieren können. In der Regel werden die Leiter zusätzlich von einer Isolationsschicht und einem Kupfer- oder Aluminiumschirm umhüllt (vgl. z.B. DE102013100955A1).

Daneben finden auch Drahtgeflechte als Verbindungselement Verwendung, die mechanisch gesehen durch ihre Flexibilität Vorteile gegenüber Stromschienen aber auch gegenüber den erwähnten Milliken-Leitern aufweisen(vgl. z.B. DE29703525U1). Durch die Verwendung solcher Drahtgeflechte kann die durch die oben beschriebenen Verdrängungseffekte bedingte Inhomogenität der Stromverteilung innerhalb der Verbindungselemente bestenfalls verringert werden. Bei den üblicherweise verwendeten Aluminium- oder Kupfergeflechten handelt es sich häufig um Sonderanfertigungen, die entsprechend höhere Kosten verursachen als dies beim Einsatz handelsüblicher Materialien der Fall wäre.

Aus der US3325588A ist eine elektrisch leitende Verbindung zur elektrischen Verbindung zweier Busleitungen mit beabstandeten benachbarten Enden bekannt, wobei an den Enden der Busleitungen im Wesentlichen parallel angeordnete Endplatten entfernbar befestigt sind. Zwischen den Endplatten sind flexible Leitungen angeordnet, deren Enden derart an den Endplatten angeordnet sind, dass das eine Ende eines flexiblen Leiters näher am Außenrand einer Endplatte und das andere Ende dieses flexiblen Leiters weiter vom Außenrand der anderen Endplatte entfernt angeordnet ist.

Es ist daher Aufgabe der vorliegenden Erfindung eine Vorrichtung zur Herstellung einer mehrphasigen elektrischen Verbindung sowie eine Anordnung mit einer entsprechenden Vorrichtung zur Verfügung zu stellen, wobei die Vorrichtung aus handelsüblichen Leitern aufgebaut ist und bei der eine möglichst homogene Stromdichteverteilung innerhalb der Vorrichtung erreicht wird, um zu verhindern, dass Bereiche innerhalb der Vorrichtung aufgrund einer lokal erhöhten Verlustleistung thermisch überlastet werden.

Die Aufgabe wird gelöst durch eine Vorrichtung zur Herstellung einer mehrphasigen elektrischen Verbindung gemäß Anspruch 1 sowie eine Anordnung aus elektrischen Stromschienen elektrischer Einrichtungen, die durch eine entsprechende Vorrichtung verbunden sind, gemäß Anspruch 8. Bevorzugte Ausführungsformen sind in den abhängigen Ansprüchen beschrieben.

Bei einer erfindungsgemäßen Vorrichtung zur Herstellung einer mehrphasigen elektrischen Verbindung mit mindestens einem Verbindungselement pro Phase, umfasst jedes Verbindungselement zwei Stromschienen und eine Anzahl N identischer, in einer Ebene parallel angeordneter, flexibler Leiter, die die beiden Stromschienen elektrisch leitend verbinden. Dabei ist ein Abstand a geometrischer Mittelpunkte von Querschnitten benachbarter Leiter voneinander mindestens doppelt so groß wie ein Durchmesser d eines dieser Leiter. Es gilt damit folgende Bedingung 1:

$$a \geq 2d$$

Finden Kabel mit einem nicht kreisförmigen Querschnitt Verwendung, so kann man obige Beziehung anwenden, indem man für einen solchen Leiter mit einer Querschnittsfläche A an Stelle des Durchmessers d einen äquivalenten Durchmesser $d_{\ddot{a}qui}$ verwendet:

$$d_{\ddot{a}qui} = 2 * \sqrt{\frac{A}{\pi}}$$

Jede Stromschiene weist jeweils einen Anschlussbereich zur elektrischen und mechanischen Verbindung des Verbindungselements mit elektrischen Stromschienen einer elektrischen Einrichtung auf. Dabei sind die Verbindungselemente, die Strom unterschiedlicher Phasen übertragen, parallel zueinander angeordnet und ein Abstand der geometrischen Mittelpunkte der Querschnitte benachbarter Leiter von benachbarten Verbindungselementen voneinander beträgt jeweils höchstens die Hälfte des Produktes aus der Anzahl der elektrischen Leiter minus 1 multipliziert mit dem Abstand der Leiter einer Phase untereinander. Diese zweite Bedingung lässt sich mit folgender Formel ausdrücken (Bedingung 2):

$$b \leq \frac{1}{2}(N-1)a$$

Mit einer solchen Vorrichtung kann beispielsweise eine elektrisch leitfähige Verbindung zwischen Stromschienen eines dreiphasigen Wechselstromausgangs eines Wechselrichters und denen eines Niederspannungseingangs eines Transformators hergestellt werden. In den Leitern einer erfindungsgemäßen Vorrichtung findet eine komplexe Überlagerung der einzelnen Verdrängungseffekte statt. Zum einen führt der Skin-Effekt innerhalb der einzelnen Leiter zu einer Verdrängung des Stromes in den Außenbereich der einzelnen Leiter. Zwischen den Leitern eines Verbindungselements einer Phase findet aufgrund des Proximity-Effektes eine Stromverdrängung in gegenüberliegenden Bereichen statt. Durch eine entsprechend der Bedingung 2 definierte beabstandete Anordnung der Verbindungselemente der Vorrichtung, die Strom anderer relativer Phasenlagen übertragen, kommt es zu einer Erhöhung der Stromdichte insbesondere in sich gegenüberliegenden Leitern unterschiedlicher Phase. Dieser Effekt ist besonders stark ausgeprägt, wenn die Phasendifferenz nahe 180° beträgt. Im Ergebnis führt diese Überlagerung der Einzeleffekte zu einer homogeneren Stromdichteverteilung innerhalb der einzelnen Leiter. Auf diese Weise steht nahezu der gesamte Leiterquerschnitt zum Stromtransport zur Verfügung und es lassen sich somit im Vergleich zu herkömmlichen Lösungen kostengünstige Verbindungselemente realisieren.

Die Erfindung macht sich die eigentlich unerwünschten Wirkungen der bereits erwähnten Skin- und Proximity-Effekte auf die Stromdichteverteilung innerhalb einer Vorrichtung zur Herstellung einer mehrphasigen elektrischen Verbindung zunutze, um durch eine durch den Aufbau der Vorrichtung bedingte vorteilhafte Überlagerung der beiden Effekte, eine teilweise Kompensation im Hinblick auf die Stromverdrängung innerhalb der Vorrichtung zu erreichen. Auf diese Weise ergibt sich eine wesentlich homogenere Stromdichteverteilung innerhalb der Vorrichtung. Damit lassen sich Vorrichtungen zur Herstellung einer mehrphasigen elektrischen Verbindung realisieren, die einen sehr einfachen Aufbau und einen geringen Materialbedarf haben und damit gegenüber den aus dem Stand der Technik bekannten Lösungen kostengünstig realisierbar sind.

In einer bevorzugten Ausführungsform einer erfindungsgemäßen Vorrichtung zur Herstellung einer mehrphasigen elektrischen Verbindung ist der Durchmesser der Leiter kleiner oder gleich der sich aufgrund des Skin-Effektes ergebenden Eindringtiefe. Dabei ist die Eindringtiefe sowohl von der Frequenz auch von der elektrischen Leitfähigkeit und der Permeabilität des Materials abhängig.

Die Befestigung der einzelnen Leiter an den Stromschienen kann auf unterschiedlichste Weise erfolgen. So sind beispielsweise bei einer erfindungsgemäßen Vorrichtung die Leiter mit Hilfe von Kabelschuhen an den Stromschienen befestigt. In einer alternativen Ausführungsform sind die Leiter zur elektrischen Kontaktierung einzeln mit den Stromschienen verpresst oder kaltverschweißt.

Zur mechanischen Fixierung der Position der Leiter sind in einer erfindungsgemäßen Ausführungsform der Vorrichtung zwischen den Leitern eines Verbindungselements elektrisch isolierende Distanzstücke angeordnet. Zusätzlich oder alternativ sind in einer anderen Ausführungsform der Vorrichtung zwischen benachbarten Verbindungselementen elektrisch isolierende Distanzstücke angeordnet, um z.B. beim Auftreten von Kurschlüssen und/oder bei Erwärmung auftretende Kräfte zwischen den Verbindungselementen abzufangen.

In einer weiteren Ausführungsform einer erfindungsgemäßen Vorrichtung werden die Leiter der Verbindungselemente und/oder die gesamte Vorrichtung vergossen. Hierbei können unterschiedliche elektrisch isolierende Vergussmassen zum Einsatz kommen, die z.B. je nach Einsatzbereich unterschiedliche mechanische Eigenschaften aufweisen, um beispielsweise die mechanische Flexibilität der Verbindungselemente bzw. der Vorrichtung zu erhalten, die für einen Toleranzausgleich bei der Verbindung zweier elektrischer Einrichtungen benötigt wird. Alternativ kann der Verguss der Vorrichtung auch erst nach Herstellung der Verbindung zweier elektrischer Einrichtungen erfolgen. In diesem Fall könnte die Vorrichtung nach Verguss auch starr ausgebildet sein.

Weiter sieht eine bevorzugte Ausführungsform einer erfindungsgemäßen Vorrichtung zur Herstellung einer mehrphasigen elektrischen Verbindung vor, dass die Leiter jeweils mit einer elektrisch isolierenden Ummantelung z.B. aus Gummi, PVC oder TPE versehen sind.

In einer erfindungsgemäßen Anordnung aus elektrischen Stromschienen elektrischer Einrichtungen, die durch eine der zuvor beschriebenen Vorrichtungen verbunden sind, sind die Verbindungselemente derart mit den Stromschienen der elektrischen Einrichtungen verbunden, dass keine benachbarten Verbindungselemente der gleichen Phase zugeordnet sind.

In einer weiteren erfindungsgemäßen Anordnung sind die Verbindungselemente so angeordnet, dass eine Abweichung einer Phasendifferenz des Stroms durch zwei benachbarte Verbindungselemente von 180° minimal ist.

Im Folgenden wird die Erfindung mithilfe von Figuren dargestellt, von denen

Fig. 1    eine erfindungsgemäße dreiphasige Ausführungsform einer Vorrichtung zur Herstellung einer mehrphasigen elektrischen Verbindung,

Fig. 2    ein erfindungsgemäßes Verbindungselement,

Fig. 3    eine schematische Darstellung der räumlichen Anordnung der elektrischen Leiter in einer dreiphasige Ausführungsform einer erfindungsgemäßen Vorrichtung zur Herstellung einer mehrphasigen elektrischen Verbindung und

Fig.4     eine schematische Darstellung der Phasenlage verschiedener stromführender Systeme und der dieser Phasenlage zugeordneten räumlichen Anordnung der Verbindungselemente zueinander zeigt.

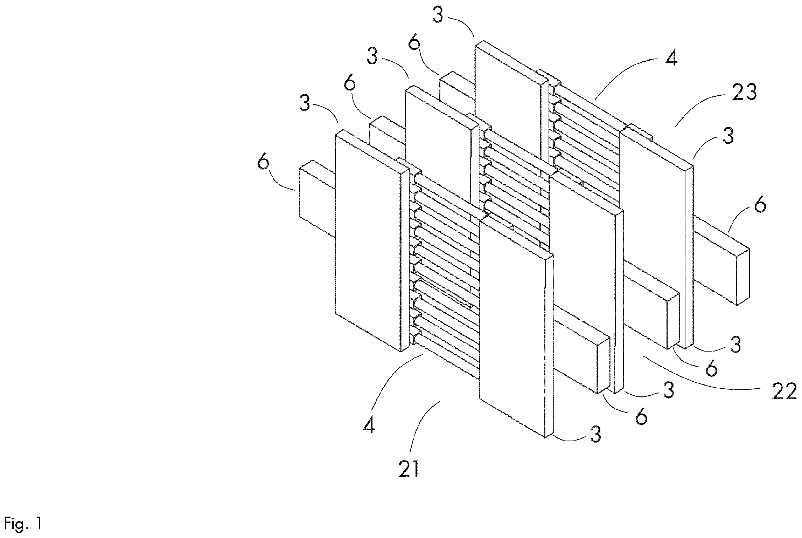

Fig. 1 zeigt eine erfindungsgemäße dreiphasige Ausführungsform einer Vorrichtung 1 zur Übertragung eines dreiphasigen Stroms. Die Vorrichtung 1 weist im dargestellten Fall pro Phase je ein Verbindungselement 2 auf, wobei die beiden Stromschienen 3 der Verbindungselemente 2 durch jeweils zehn Leiter 4 miteinander elektrisch leitend verbunden sind. Die Leiter 4 eines Verbindungselements sind parallel zueinander angeordnet und bezüglich ihres Materials und ihrer Geometrie identisch. Dabei erfolgt die Befestigung der einzelnen Leiter 4 an den entsprechenden Stromschienen 3 in der dargestellten Ausführungsform mit Hilfe von Kabelschuhen 7. Eine alternative Kontaktierung der Leiter an den Stromschienen z.B. mittels Verpressen oder Verschweißen ist aber auch möglich. Bei der parallelen Anordnung der Verbindungselemente 2 zueinander ist der Abstand b gemäß der Bedingung 2 zu wählen. Die elektrische und mechanische Verbindung der einzelnen Verbindungselemente 2 mit elektrischen Stromschienen 6 elektrischer Einrichtungen sind in der in Fig. 1 dargestellten Perspektive nicht im Detail zu erkennen. Die elektrischen Einrichtungen sind aus Gründen der Übersichtlichkeit nicht dargestellt.

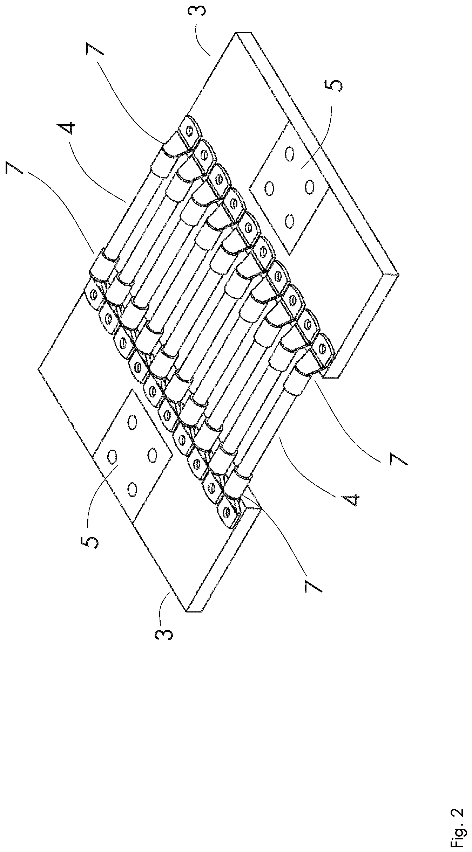

In der Fig. 2, die eine perspektivische Aufsicht auf ein Verbindungselement 2 der Fig. 1 zeigt, ist neben den Stromschienen 2, den Kabelschuhen 7 und den Leitern 4 auch jeweils ein Anschlussbereich 5 zur elektrischen und mechanischen Verbindung des Verbindungselements 2 mit in dieser Figur nicht enthaltenen elektrischen Stromschienen 6 elektrischer Einrichtungen dargestellt. Diese Verbindungen der Stromschienen 3 mit den Stromschienen 6 elektrischer Einrichtungen in den Bereichen der Anschlussbereiche 5 können z.B. durch Verschrauben, Vernieten oder Verschweißen hergestellt werden. Dabei kann die Form und die Größe der in der Fig. 2 quadratisch angedeuteten Anschlussbereiche 5 entsprechend externer Anforderungen variieren.

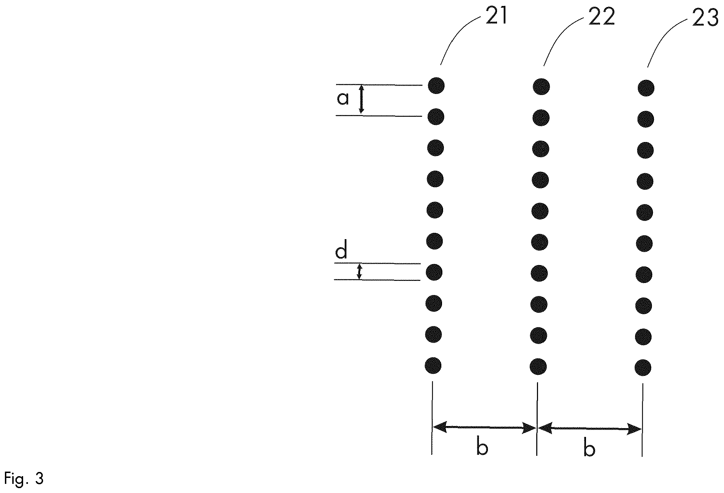

Fig. 3 zeigt schematisch einen Schnitt durch eine dreiphasig ausgebildete Vorrichtung 1 im Bereich der Leiter 4. Dargestellt sind hier nur die Querschnitte der Leiter 4. Pro Phase werden auch hier wieder zehn Leiter 4 mit einem Durchmesser d verwendet. Die Leiter 4 eines Verbindungselements 21, 22, 23 haben jeweils einen Abstand a voneinander und die drei dargestellten Verbindungselemente 21, 22, 23 haben jeweils einen Abstand b voneinander. Dabei sind auch die beiden weiter vorn angeführten Bedingungen $a \geq 2\,d$ und

$$b \leq \frac{1}{2}\,(N-1)\,a$$ erfüllt.

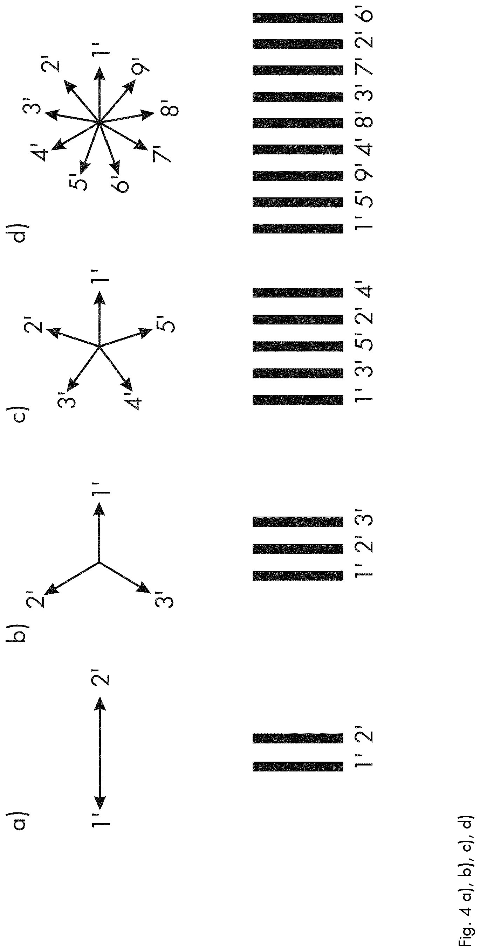

Die Figuren 4a) bis c) zeigen jeweils in einem oberen Bereich eine Stromzeigerdarstellung, bei der bildlich jeweils die Lage der Phasen der Ströme zueinander in verschiedenen Systemen durch die verwendeten Pfeile angedeutet ist. Im ersten Fall nach Fig. 4a) handelt es sich um ein zweiphasiges System, bei dem die Phasendifferenz 180° beträgt. Es folgt in Fig. 4b) ein dreiphasiges System mit jeweils 120° Phasendifferenz. Direkt unterhalb der Darstellung der Phasenlage ist schematisch die Anordnung der Teilelemente 4 zueinander angegeben. Für die Fälle 4a) und 4b) ist keine Anordnung der Teilelemente 2 zueinander ausgezeichnet. Bei den beiden weiteren Beispielen 4c) und 4d), die beispielhaft stromführende Systeme mit fünf bzw. neun unterschiedlichen Phasen darstellen, ist bei der Anordnung der Verbindungselemente 2 hinsichtlich des Einflusses des Proximity-Effektes auf die Stromdichteverteilung innerhalb der Leiter 4 zu berücksichtigen, dass eine Abweichung einer Phasendifferenz des Stroms durch zwei benachbarte Verbindungselemente 2 von 180° minimal ist. Damit ergibt sich im in Fig. 4c) dargestellten Beispiel eine Anordnung, bei der die Phasendifferenz des Stroms durch zwei benachbarte Verbindungselemente 2 jeweils 144° beträgt, wenn neben dem Verbindungselement 2 mit der Phasenlage 1' das Verbindungselement 2 mit der Phasenlage 3' angeordnet wird. Daneben folgen die Verbindungselemente 2 mit den Phasenlagen 5', 2' und dann 4'. Ganz analog ist bei dem in der Teilfigur 4d) dargestellten Fall zu verfahren, bei dem zwischen benachbarten Stromzeigern eine Phasendifferenz von 40° besteht.

In diesem Fall wählt man bei der Anordnung der neun Verbindungselemente 2 folgende Abfolge hinsichtlich der Phasenlage: 1', 5', 9', 4', 8', 3', 7', 2', 6'. Damit beträgt die Phasendifferenz der Ströme durch benachbarte Verbindungselemente 2 160°.

**Bezugzeichen**

| 1 | Vorrichtung |
|---|---|
| 2 | Verbindungselement |
| 3 | Stromschiene |
| 4 | Leiter |
| 5 | Anschlussbereich |
| 6 | Stromschiene |
| 7 | Kabelschuh |
| 21 | Verbindungselement |
| 22 | Verbindungselement |
| 23 | Verbindungselement |

**Patentansprüche**

1.  Vorrichtung (1) zur Herstellung einer mehrphasigen elektrischen Verbindung, umfassend mindestens ein Verbindungselement (2) pro Phase,
    wobei jedes Verbindungselement (2) zwei Stromschienen (3) und eine Anzahl (N) identischer, in einer Ebene parallel angeordneter, flexibler Leiter (4) umfasst, die die beiden Stromschienen (3) elektrisch leitend verbinden,
    wobei ein Abstand (a) geometrischer Mittelpunkte von Querschnitten benachbarter Leiter (4) voneinander mindestens doppelt so groß ist wie ein Durchmesser (d) eines der Leiter (4),
    wobei jede Stromschiene (3) jeweils einen Anschlussbereich (5) zur elektrischen und mechanischen Verbindung des Verbindungselements (2) mit einer elektrischen Einrichtung aufweist,
    **dadurch gekennzeichnet, dass**
    die Verbindungselemente (2) parallel zueinander angeordnet sind und die geometrischen Mittelpunkte der Querschnitte benachbarter Leiter (4) von benachbarten Verbindungselementen (2), die unterschiedlichen Phasen zugeordnet sind, einen Abstand (b) voneinander aufweisen, der jeweils höchstens die Hälfte des Produktes aus der Anzahl (N) der elektrischen Leiter (4) minus 1 multipliziert mit dem Abstand (a) der Leiter (4) einer Phase untereinander beträgt.

2.  Vorrichtung (1) nach Anspruch 1, wobei der Durchmesser d der Leiter (4) kleiner oder gleich der sich aufgrund des Skin-Effektes ergebenden Eindringtiefe 6 ist.

3.  Vorrichtung (1) nach einem der vorangehenden Ansprüche, wobei
die Leiter (4) mit Hilfe von Kabelschuhen (7) an den Stromschienen (3) befestigt sind.

**4.** Vorrichtung (1) nach einem der Ansprüche 1 bis 3, wobei
die Leiter (4) zur elektrischen Kontaktierung einzeln mit den Stromschienen (3) verpresst oder kaltverschweißt sind.

**5.** Vorrichtung (1) nach einem der vorangehenden Ansprüche, wobei
zwischen den Leitern (4) eines Verbindungselements (2) elektrisch isolierende Distanzstücke angeordnet sind.

**6.** Vorrichtung (1) nach einem der vorangehenden Ansprüche, wobei
zwischen benachbarten Verbindungselementen (2) elektrisch isolierende Distanzstücke angeordnet sind.

**7.** Vorrichtung (1) nach einem der vorangehenden Ansprüche, wobei
die Leiter (4) der Verbindungselemente und/oder die gesamte Vorrichtung vergossen sind/ist.

**8.** Vorrichtung (1) nach einem der vorangehenden Ansprüche, wobei
die Leiter (4) jeweils mit einer elektrisch isolierenden Ummantelung, insbesondere aus Gummi, PVC oder TPE versehen sind.

**9.** Anordnung aus elektrischen Stromschienen (6) elektrischer Einrichtungen, die durch eine Vorrichtung nach einem der Ansprüche 1 bis 8 verbunden sind, wobei die Verbindungselemente (2, 21, 22, 23) derart mit den Stromschienen (6) der elektrischen Einrichtungen verbunden sind, dass keine benachbarten Verbindungselemente (6) der gleichen Phase zugeordnet sind.

**10.** Anordnung nach Anspruch 9, wobei die Verbindungselemente (2) so angeordnet sind, dass eine Abweichung einer Phasendifferenz des Stroms durch zwei benachbarte Verbindungselemente (2) von 180° minimal ist.

## Claims

**1.** An apparatus (1) for establishing a multi-phase electrical connection, comprising at least one connecting element (2) per phase,
wherein each connecting element (2) comprises two busbars (3) and a number (N) of identical, flexible conductors (4) arranged in parallel in a plane, said conductors electrically conductively connecting the two busbars (3),
wherein a spacing (a) of geometric center points of cross sections of adjacent conductors (4) from one another is at least twice as large as a diameter (d) of one of the conductors (4), wherein each busbar (3) respectively comprises a connection region (5) for electrical and mechanical connection of the connecting element (2) to an electrical device,
**characterized in that**
the connecting elements (2) are arranged in parallel with one another and the geometric center points of the cross sections of adjacent conductors (4) of adjacent connecting elements (2), which are assigned to different phases, have a spacing (b) from one another that is in each case at most half the product of the number (N) of electrical conductors (4) minus 1 multiplied by the spacing (a) of the conductors (4) of a phase from one another.

**2.** The apparatus (1) according to claim 1, wherein the diameter d of the conductors (4) is smaller than or equal to the penetration depth $\delta$ that results on account of the skin effect.

**3.** The apparatus (1) according to one of the preceding claims, wherein
the conductors (4) are secured to the busbars (3) with the aid of cable lugs (7).

**4.** The apparatus (1) according to one of claims 1 to 3, wherein
the conductors (4) are pressed or cold-welded individually to the busbars (3) for the purpose of electrical contact-connection.

**5.** The apparatus (1) according to one of the preceding claims, wherein
electrically isolating spacers are arranged between the conductors (4) of a connecting element (2).

**6.** The apparatus (1) according to one of the preceding claims, wherein
electrically isolating spacers are arranged between adjacent connecting elements (2).

**7.** The apparatus (1) according to one of the preceding claims, wherein
the conductors (4) of the connecting elements and/or the entire apparatus are/is molded.

**8.** The apparatus (1) according to one of the preceding claims, wherein
each of the conductors (4) are provided with an electrically isolating sheath, in particular of rubber, PVC or TPE.

**9.** An arrangement of electrical busbars (6) of electrical devices, which are connected by an apparatus according to one of claims 1 to 8, wherein the connecting elements (2, 21, 22, 23) are connected to the busbars (6) of the electrical devices in such a way that no adjacent connecting elements (2) are assigned to the same phase.

10. The arrangement according to claim 9, wherein the connecting elements (2) are arranged in such a way that a deviation between a phase difference of the current through two adjacent connecting elements (2) and 180° is minimal.

## Revendications

1. Système (1) pour établir une liaison électrique polyphasée, comprenant au moins un élément de liaison (2) par phase,
chaque élément de liaison (2) comportant deux barres-bus (3) et un nombre (N) de conducteurs flexibles (4) identiques disposés en parallèle dans un plan, qui relient avec conduction électrique les deux barres-bus (3),
un écart (a) des centres géométriques des sections transversales des conducteurs (4) voisins entre eux étant au moins le double d'un diamètre (d) de l'un des conducteurs (4), chaque barre-bus (3) possédant respectivement une zone de raccordement (5) servant à la liaison électrique et mécanique de l'élément de liaison (2) avec un dispositif électrique,
**caractérisé en ce que**
les éléments de liaison (2) sont disposés en parallèle les uns des autres et les centres géométriques des sections transversales des conducteurs (4) voisins des éléments de liaison (2) voisins, qui sont associés à des phases différentes, présentent un écart (b) entre eux qui est respectivement au maximum égal à la moitié du produit du nombre (N) de conducteurs électriques (4) moins 1, multiplié par l'écart (a) des conducteurs (4) d'une phase entre eux.

2. Système (1) selon la revendication 1, le diamètre d des conducteurs (4) étant inférieur à la profondeur de pénétration δ qui résulte du fait de l'effet pelliculaire.

3. Système (1) selon l'une des revendications précédentes, les conducteurs (4) étant fixés aux barres-bus (3) à l'aide de cosses de câble (7).

4. Système (1) selon l'une des revendications 1 à 3, les conducteurs (4), en vue d'établir le contact électrique, étant pressés ou soudés à froid individuellement avec la barre-bus (3).

5. Système (1) selon l'une des revendications précédentes, des entretoises électriquement isolantes étant disposées entre les conducteurs (4) d'un élément de liaison (2).

6. Système (1) selon l'une des revendications précédentes, des entretoises électriquement isolantes étant disposées entre les éléments de liaison (2) voisins.

7. Système (1) selon l'une des revendications précédentes, les conducteurs (4) des éléments de liaison et/ou l'ensemble du système étant scellé(s).

8. Système (1) selon l'une des revendications précédentes, les conducteurs (4) étant respectivement pourvus d'une gaine électriquement isolante, notamment en caoutchouc, en PVC ou en TPE.

9. Arrangement composé de barres-bus électriques (6) de dispositifs électriques, lesquelles sont reliées par un système selon l'une des revendications 1 à 8, les éléments de liaison (2, 21, 22, 23) étant reliés à des barres-bus (6) du dispositif électrique de telle sorte que la même phase n'est attribuée à aucun des éléments de liaison (6) voisins.

10. Arrangement selon la revendication 9, les éléments de liaison (2) étant disposés de telle sorte qu'un écart d'une différence de phase du courant à travers deux éléments de liaison (2) voisins est au minimum de 180°.

EP 3 332 464 B1

Fig. 1

EP 3 332 464 B1

9

Fig. 3

Fig. 4 a), b), c), d)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29703525 U1
- US 3178668 A
- US 20100051342 A1
- DE 102012107751 A1
- DE 102013100955 A1
- US 3325588 A

**In der Beschreibung aufgeführte Nicht-Patentliteratur**

- **R. SUCHANTKE ; H. JUST.** Numerische Untersuchung des Wechselstromwiderstandes von Energiekabeln. *PROJEKT ELEKTROMAGNETISCHE SIMULATION: WECHSELSTROMWIDERSTAND ENERGIEKABEL,* 13. Marz 2014